(19) Europäisches Patentamt
European Patent Office
Office européen des brevets

(11) Publication number: 0 246 015 B1

(12) # EUROPEAN PATENT SPECIFICATION

(45) Date of publication of patent specification: **10.08.94** (51) Int. Cl.$^5$: **C07F 9/48**

(21) Application number: **87303962.2**

(22) Date of filing: **01.05.87**

(54) **Process for preparing phosphonous acids.**

(30) Priority: **12.05.86 US 861794**

(43) Date of publication of application:
**19.11.87 Bulletin 87/47**

(45) Publication of the grant of the patent:
**10.08.94 Bulletin 94/32**

(84) Designated Contracting States:
**AT BE CH DE FR GB IT LI LU NL SE**

(56) References cited:
**FR-A- 984 634**
**US-A- 2 724 718**
**US-A- 4 590 014**

**CHEMICAL ABSTRACTS, vol. 86, no. 7, 14 February 1977, Columbus, OH (US); p. 547, no. 43817q&NUM;**

**HACKH's CHEMICAL DICTIONARY; p. 514&NUM;**

**METHODEN DER ORGANISCHEN CHEMIE, Houben-Weyl, Organische Phosphorverbindungen, Teil I, 1963; pp. 296-299&NUM;**

**GMELIN's HANDBUCH DER ANORGANISCHEN CHEMIE, "Phosphor", vol. C, 1965; pp. 99, 101-103, 116&NUM;**

(73) Proprietor: **E.R. Squibb & Sons, Inc.**
**Lawrenceville-Princeton Road**
**Princeton, N.J. 08540-4000 (US)**

(72) Inventor: **Thottathil, John Kurian**
**27 Springhill Drive**
**Lawrenceville, NJ (US)**

(74) Representative: **Thomas, Roger Tamlyn et al**
**D. Young & Co.**
**21 New Fetter Lane**
**London EC4A 1DA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 246 015 B1

## Description

The present invention relates to a process for preparing phosphonous acids which are useful in preparing phosphonic acids and phosphinic acids which are used for preparing angiotensin converting enzyme inhibitors used in treating hypertension as disclosed in U.S. Patent No. 4,452,790.

Phosphonous acids are employed in preparing phosphonic acids and phosphinic acids and their derivatives thereof which are useful in preparing angiotensin converting enzyme inhibitors, as disclosed, for example, in U.S. Patent No. 4,452,790 to Karanewsky, et al.

Until now, phosphonous acids have been prepared by high pressure reaction techniques wherein a high pressure bomb or autoclaves are employed as described by E.E. Nifantev and M.P. Koroteev, J. Gen. Chem. (U.S.S.R.), 37 1293 (1967); U. S. Patent No. 2,726,256 to R. C. Morris and J. L. Van Winkle (assigned to Shell Development Co.), [C. A. 10124b, 50 (1956)]; N. V. de Bataafsche, Petroleum Maatschappig; British Patent 660,918, Nov. 14, 1951, [C.A. 8145C, 46 (1952)]; U. S. Patent No. 2,648,695 to C. W. Smith (assigned to Shell Development Co.), [C. A. 8252d, 48 (1954)].

In such prior art procedures, reactions were conducted in autoclaves (bombs) at high temperatures (120-150 °C) and the products of the reaction presented a hard to separate mixture of alkylphosphonous and dialkylphosphinic acids with a total yield of 30-70%. The process of the present invention employs relatively mild conditions, namely, only refluxing in alcohol solvents in open vessel reactors to produce phosphonous acids in good yield and excellent purity.

U. S. Patent No. 4,590,014 to Wolf et al discloses a method for preparing alkyl phosphinate salts by simultaneously adding an olefinic starting material ($R-CH=CH_2$) and a free radical initiator, such as benzoyl peroxide or azobisisobutyronitrile, to an aqueous alcoholic solution of sodium hypophosphite and allowing the reaction to continue for 1.5 to 6 hours. Due to the presence of the sodium salt starting material, the reaction medium must be maintained under neutral conditions to avoid converting the sodium salt to the hypophosphorous acid.

U. S. Patent No. 2,957,931 to Hamilton et al discloses a process for preparing organic phosphorus compounds wherein at least one organic radical is joined to a phosphorus by a direct carbon-phosphorus linkage which process involves the reaction of phosphorus compounds having at least one phosphorus-hydrogen linkage per molecule (including hypophosphorous acid and sodium hypophosphite) with organic compounds having at least one unsaturated carbon-carbon linkage per molecule (which include 1-olefins), which reaction is carried out at temperatures of from 20 °C to 300 °C in the presence of water or alcohol solvent. As indicated in column 26, where water is used as a solvent, alkaline conditions would be preferred, where an alcohol solvent is employed, the alkyl ester is obtained.

U. S. Patent No. 4,108,889 to Connor discloses a method for preparing alkane phosphonic acids by reacting an $\alpha$-olefin with a macroreticular strong acid cation exchange resin to isomerize the olefin to form an internally unsaturated olefin, reacting such olefin with dimethyl phosphite in the presence of free radical initiator, such as di-t-butylperoxide, di-benzoylperoxide or azobisisobutyronitrile to produce non-terminally substituted $C_{12}$-$C_{22}$ alkanephosphonic acid dimethyl ester and demethylating the dimethyl ester with HCl or HBr.

U. S. Patent No. 4,374,780 to Robertson discloses a method for preparing di-2,4,4′-trimethylpentylphosphinic acid by free radical addition of two moles of 2,4,4′-trimethylpentene-1 to phosphine employing high phosphine pressures of up to 100 psig, followed by oxidation with two moles of hydrogen peroxide. Azobisisobutyrylnitrile is employed as a free radical initiator.

Chemical Abstracts, Vol. 86, No. 7, 14th February 1977, page 547, Abstract No. 43817q, Columbus, Ohio, US, describes the simultaneous preparation of alkylphosphonic and dialkylphosphinic acids by heating hypophosphorous acid with olefins in the presence of organic peroxides and $H_2SO_4$ under an inert gas atmosphere.

Methoden der organischen Chemie (Houben-Weyl), organische Phosphorverbindungen Teil 1 (1963), pages 296-299, describes the reaction of hypophosphorous acids and their salts with 1-olefins in the presence of peroxy catalysts to provide the corresponding compounds with an alkyl group attached to the phosphorus atom.

In accordance with the present invention, a mild safe process is provided for preparing phosphonous acids, directly, without preparing alcohol esters, wherein high pressures and unsafe gases such as phosphine are not required, which process may be described by the following reaction:

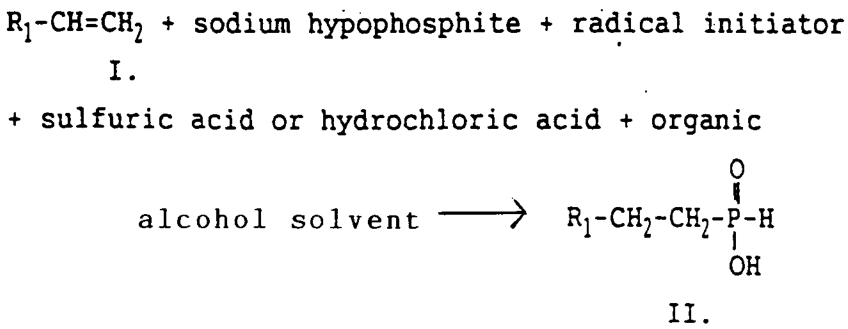


I.

II.

wherein $R_1$ is alkyl or arylalkyl.

Preferred reaction features will now be described.

In carrying out the above reaction, the olefin I is treated with a solution of sodium hypophosphite in an organic alcoholic solvent, which solution is cooled to a temperature of less than about 10 °C, a radical initiator and sulfuric acid or hydrochloric acid at a pH of from about 0 to about 4 and preferably from about 0 to about 2. In this manner, the phosphonous acid product is prepared directly without first preparing an alcohol ester intermediate.

The above reaction is carried out at a temperature of within the range of from about 48 °C to about 100 °C, preferably within the range of from about 50 to about 100 °C, and optimally, at the refluxing temperature of the organic solvent, and for a period within the range of from about 2 to about 20 hours, and preferably for about 4 to about 12 hours.

In general, the phosphorus-containing reagent will be employed in a molar ratio to the olefin I of within the range of from about 0.5:1 to about 5:1 and preferably from about 1:1 to about 2:1.

The radical initiator will be usually employed in catalytic amounts but may be employed in a molar ratio to the olefin I of within the range of from about 0.01:1 to about 0.3:1. Examples of suitable radical initiators include, but are not limited to, azobisisobutyronitrile, di-t-butyl peroxide, benzoyl peroxide or hydrogen peroxide, with azobisisobutyronitrile being preferred.

Examples of alcohol solvents for the reaction include, but are not limited to, ethanol, methanol, isopropyl alcohol, t-butyl alcohol, with ethanol and methanol being preferred. Sufficient solvent will be employed to completely dissolve the reagents.

As sodium hypophosphite ($NaH_2PO_2 \cdot H_2O$) is employed as the phosphorus-containing reagent, sulfuric acid or hydrochloric acid will be employed in the reaction mixture in order to maintain acidic conditions of pH of from about 0 to about 4 and preferably from about 0 to about 2. Such acid will normally be employed in a molar ratio to phosphorus-containing reagent of within the range of from about 0.5:1 to about 2:1, and preferably from about 1:1 to about 1.5:1.

The term "aryl," as used throughout the specification, either by itself or as part of a larger group, refers to phenyl or phenyl substituted with halogen, alkyl, alkoxy, alkylthio, hydroxy, alkanoyl, nitro, amino, dialkylamino, or trifluoromethyl groups. Phenyl and monosubstituted phenyl are preferred and phenyl is the most preferred.

The term "alkyl" or "lower alkyl," as used throughout the specifications either by itself or as part of a larger group, refers to straight or branched chain groups having 1 to 10 carbon atoms in the normal chain which may include an aryl, cycloalkyl or halo substituent, or amino substituent of the structure

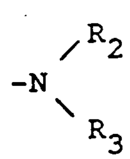

where $R_2$ and $R_3$ may be the same or different and can be H, lower alkyl, arylalkyl, aryl, t-butyloxycarbonyl, benzhydryl or trityl. Alkyl groups having 1 to 4 carbon atoms are preferred.

The term "cycloalkyl," as used throughout the specification, either by itself or as part of a larger group, refers to groups having 3 to 7 carbon atoms, such as cyclopropyl, cyclobutyl, cyclopentyl, cyclohexyl or cycloheptyl.

The term "arylalkyl" or "cycloalkylalkyl" as used through the specification, either by itself or as part of a larger group, refers to an "alkyl" group as defined above containing an "aryl" or "cycloalkyl" substituent.

The term "halo" or "halogen" as used throughout the specification, either by itself or as part of a larger group, refers to Cl, Br, F, I or $CF_3$.

Examples of olefins I useful as starting materials in carrying out the present invention include, but are not limited to, $C_2H_5$-CH = $CH_2$,$C_3H_7$-CH = $CH_2$, $C_6H_5(CH_2)_3$-CH = $CH_2$, $C_{10}H_{21}$-CH = $CH_2$, $C_6H_{13}$CH = $CH_2$, $C_4H_9$CH = $CH_2$, $C_5H_{11}$CH = $CH_2$, $C_6H_5CH_2$-CH = $CH_2$, $C_6H_5(CH)_2$-CH = $CH_2$,

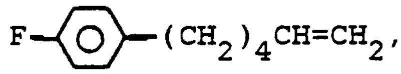,
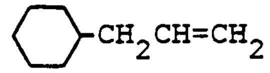,
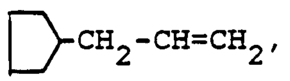,
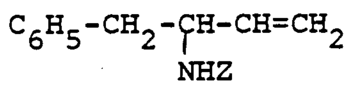,
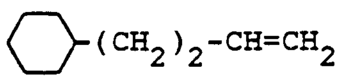,
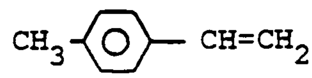,
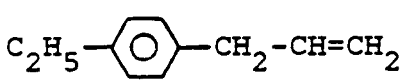, or
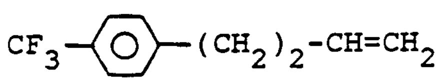,

with $C_6H_5(CH_2)_2$-CH = $CH_2$ or

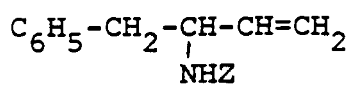

being preferred.

The following examples are illustrative and represent preferred embodiments of the invention. Temperatures are given in degrees centigrade.

## Example 1

### 4-Phenylbutyl phosphonous acid (using azobisisobutyronitrile as the initiator catalyst)

A solution of sodium hypophosphite (2.41 g; 0.022727 moles; 3 equiv.) in ethanol (50 ml) was cooled below 0 °C in an ice/salt bath followed by the dropwise addition of concentrated $H_2SO_4$ (0.74 g; 0.007576 moles) (to provide a pH = ~0.7). 4-Phenyl-1-butene (1.0 g; o.007576 moles; 1 equiv.), and azobisisobutyronitrile (0.25 g; 0.001515 moles; 0.20 equiv.) were then added. The ice bath was removed and the mixture was heated to reflux temperature and stirred for 18 hours. The majority of the ethanol was removed on a rotavap at 40 °C and the residue was taken up in water (30 ml) and was basified with 10% aq. NaOH solution. The solution was extracted with ether (2x10 ml) followed by acidification of the aqueous layer with concentrated HCl. Solution was saturated with NaCl and extracted with ether (3x20 ml). Ether layers were combined and washed with deionized water (2x10 ml) and dried over $MgSO_4$. Solvent was removed on a rotavap to yield 1.14 g (76.0%) of title acid as a colorless oil, which solidified on standing at room temperature.

TLC, silica gel, 20:1:1 $CH_2Cl_2/CH_3OH/CH_3CO_2H$ showed single spot at $R_f$ = 0.16.

| | | | |
|---|---|---|---|
| Anal Calc'd for $C_{10}H_{15}O_2P$: | C, 60.61%; | H, 7.58; | P, 15.66%. |
| Found: | C, 60.59%; | H, 7.69%; | P, 15.6%. |

$^{13}C$ spectra data

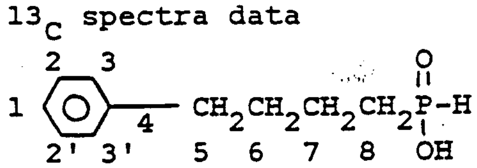

| Carbon | |
|---|---|
| 1 | 125.64 |
| 2, 3<br>2',3' | 128.10 |
| 4 | 141.49 |
| 5 | 35.18 |
| 6 | 20.24 (2 Hz) |
| 7 | 31.80 (15.62 Hz) |
| 8 | 28.88 (93.75 Hz) |

Example 2

4-Phenylbutylphosphonous acid (using methanol as the solvent and sodium hypophosphite-sulfuric acid as the reagent)

To a solution of sodium hypophosphite (0.8 gm, 0.0076 moles) in methanol (25 ml) was added 4-phenyl-1-butene (0.5 gm, 0.0037 mole), radical initiator catalyst azobisisobutyronitrile (0.05 gm) and concentrated sulphuric acid (0.37 gm, 0.0037 moles) and the reaction mixture (having a pH = ~1.8) refluxed for 20 hours with vigorous stirring. Usual workup as mentioned in Example 1 gave the title compound in 60% yield (0.45 gm) as colorless clear oil, which solidified on standing at ambient temperature.

Example 3

4-Phenylbutylphosphonous acid (using benzoyl peroxide as the catalyst)

The procedure used was similar to that described in Example 1, except benzoyl peroxide was substituted for azobisisobutyronitrile.

Thus, 0.5 gm of 4-phenyl-1-butene on reaction with 0.8 gm of sodium hypophosphite, and 0.37 gm of sulphuric acid and 0.04 gm of benzoyl peroxide in 25 ml ethanol produced 0.67 gm (89.3%) of the title product as a clear oil.

Example 4

p-Fluorophenylbutyl phosphonous acid

The procedure as described in Example 1 was employed, except 4-(p-fluorophenyl)-1-butene was substituted for 4-phenyl-1-butene to produce the title compound as a colorless thick oil.

Example 5

n-Hexylphosphonous acid

The procedure as described in Example 1 is employed, except 1-hexene is substituted for 4-phenyl-1-butene to produce the title compound as a clear liquid.

**Claims**

1. A process for preparing phosphonous acids of the structure

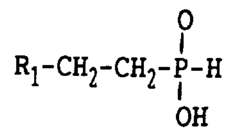

wherein $R_1$ is a straight or branched chain alkyl group which has 1 to 10 carbon atoms in the normal chain and which may include a substituent which is (a) phenyl or phenyl substituted with halogen, alkyl, alkoxy, alkylthio, hydroxy, alkanoyl, nitro, amino, dialkylamino, or trifluoromethyl, (b) $C_3$ to $C_7$ cycloalkyl, (c) halogen, (d) trifluoromethyl or (e) amino of the structure

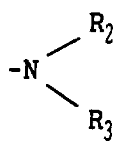

where $R_2$ and $R_3$ may be the same or different and can be H, lower alkyl, arylalky, aryl, t-butyloxycarbonyl, benzhydryl or trityl; which process comprises reacting an olefin of the structure

$R_1\text{-}CH=CH_2$

wherein $R_1$ is as defined above, with sodium hypophosphite in the presence of an organic alcohol solvent, a radical initiator and sulfuric acid or hydrochloric acid to form the phosphonous acid directly, without forming the alcohol ester, and recovering said phosphonous acid from the reaction mixture.

2. The process as defined in Claim 1 wherein the reaction is carried out at a pH of from about 0 to about 4.

3. The process as defined in Claim 2 wherein the reaction is carried out at a pH of from about 0 to about 2.

4. The process as defined in any preceding claim wherein the radical initiator is employed in catalytic amounts.

5. The process as defined in any preceding claim wherein the radical initiator is azobisisobutyronitrile, di-t-butyl peroxide, benzoyl peroxide or hydrogen peroxide.

6. The process as defined in Claim 5 wherein the radical initiator is azobisisobutyronitrile.

7. The process as defined in any preceding claim wherein the phosphorus-containing reagent is employed in a molar ratio to the olefin of within the range of from about 0.5:1 to about 6:1.

8. The process as defined in any preceding claim wherein the radical initiator is employed in a molar ratio to the olefin of within the range of from about 0.01:1 to about 0.3:1.

9. The process as defined in any preceding claim wherein the olefin is alkyl-$CH=CH_2$.

**10.** The process as defined in any one of Claims 1-9 wherein the olefin is arylalkyl-$CH=CH_2$.

**11.** The process as defined in Claim 10 wherein the olefin is

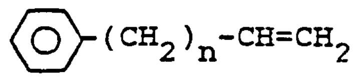

wherein n is 2, 3 or 4.

**12.** The process as defined in any preceding claim wherein the reaction is carried out at a temperature of within the range of from about 40 to about 120 ° C.

**13.** The process as defined in any preceding claim wherein the organic alcohol solvent is ethanol or methanol.

**14.** The process as defined in Claim 13 wherein the reaction is carried out at about the reflux temperature of the organic solvent.

**15.** The process as defined in any preceding claim wherein the reaction is carried out for a period of from about 3 to about 20 hours.

**16.** The process as defined in any preceding claim wherein $R_1$ is alkyl or phenyl-alkyl wherein the phenyl group is optionally substituted by halogen or trifluoromethyl.

**Patentansprüche**

**1.** Verfahren zur Herstellung von phosphonigen Säuren der Struktur

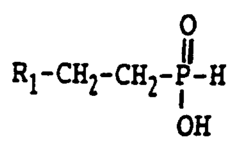

in der $R_1$ ein linearer oder verzweigter Alkylkettenrest ist, welcher 1 bis 10 Kohlenstoffatome in der Grundkette enthält und welcher einen Substituenten einschließen kann, der

(a) ein Phenylrest oder ein halogen-, alkyl-, alkoxy-, alkylthio-, hydroxy-, alkanoyl-, nitro-, amino-, dialkylamino-, oder trifluormethyl-substituierter Phenylrest,
(b) ein $C_3$-$C_7$-Cycloalkylrest,
(c) ein Halogenatom,
(d) Trifluormethylrest oder
(e) ein Aminorest der Struktur

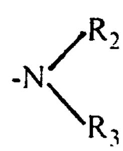

in der $R_2$ und $R_3$ gleich oder verschieden sein können und H, einen Niederalkyl-, Arylalkyl-, Aryl-, tert-Butyloxycarbonyl-, Benzhydryl- oder Tritylrest bedeuten können

ist; wobei dieses Verfahren das Umsetzen eines Olefins der Struktur

$R_1-CH=CH_2$,

in der $R_1$ die vorstehende Bedeutung hat, mit Natrium-hypophosphit in Gegenwart eines organischen

alkoholischen Lösungsmittels, einem Radikalbildner und Schwefelsäure oder Salzsäure um phosphonige Säure auf direktem Wege, ohne die Alkoholester zu bilden, herzustellen, und die phosphonige Säure aus dem Umsetzungsgemisch zurückzugewinnen.

**2.** Verfahren gemäß Anspruch 1, wobei die Umsetzung bei einem pH-Wert von etwa 0 bis etwa 4 durchgeführt wird.

**3.** Verfahren gemäß Anspruch 2, wobei die Umsetzung bei einem pH-Wert von etwa 0 bis etwa 2 durchgeführt wird.

**4.** Verfahren gemäß einem der vorstehenden Ansprüche, wobei der Radikalbildner in katalytischen Mengen verwendet wird.

**5.** Verfahren gemäß einem der vorstehenden Ansprüche, wobei der Radikalbildner Azobisisobutyronitril, Di-tert-butylperoxid, Benzoylperoxid oder Wasserstoffperoxid ist.

**6.** Verfahren gemäß Anspruch 5, wobei der Radikalbildner Azobisisobutyronitril ist.

**7.** Verfahren gemäß einem der vorstehenden Ansprüche, wobei das phosphorhaltige Reagenz in einem molaren Verhältnis zum Olefin innerhalb des Bereiches von etwa 0,5 : 1 bis etwa 6 : 1 verwendet wird.

**8.** Verfahren gemäß einem der vorstehenden Ansprüche, wobei der Radikalbildner in einem molaren Verhälnis zum Olefin innerhalb des Bereiches von etwa 0,01 : 1 bis etwa 0,3 : 1 verwendet wird.

**9.** Verfahren gemäß einem der vorstehenden Ansprüche, wobei das Olefin Alkyl-$CH=CH_2$ ist.

**10.** Verfahren gemäß einem der Ansprüche 1 bis 9, wobei das Olefin ein Arylalkyl-$CH=CH_2$ ist.

**11.** Verfahren gemäß Anspruch 10, wobei das Olefin

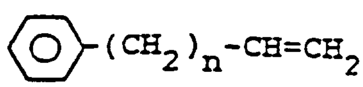

wobei n den Wert 2, 3 oder 4 bedeutet, ist

**12.** Verfahren gemäß einem der vorstehenden Ansprüche, wobei die Umsetzung bei einer Temperatur innerhalb des Bereiches von etwa 40 bis etwa 120 °C durchgeführt wird.

**13.** Verfahren gemäß einem der vorstehenden Ansprüche, wobei das organische alkoholische Lösungsmittel Ethanol oder Methanol ist.

**14.** Verfahren gemäß Anspruch 13, wobei die Umsetzung etwa bei der Rückflußtemperatur des organischen Lösungsmittels durchgeführt wird.

**15.** Verfahren gemäß einem der vorstehenden Ansprüche, wobei die Umsetzung während eines Zeitraums von etwa 3 bis etwa 20 Stunden durchgeführt wird.

**16.** Verfahren gemäß einem der vorstehenden Ansprüche, wobei $R_1$ ein Alkyl- oder Phenylalkylrest ist, in dem der Phenylrest gegebenenfalls halogen- oder trifluormethyl-substituiert sein kann.

## Revendications

**1.** Procédé de préparation d'acides phosphoneux de formule développée

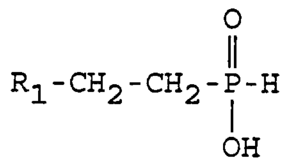

dans laquelle $R_1$ est une groupe alkyle à chaîne droite ou ramifiée qui a de 1 à 10 atomes de carbone dans la chaîne normale et qui peut comporter un substituant, lequel est (a) un groupe phényle éventuellement substitué par halogène, alkyle, alcoxy, alkylthio, hydroxy, alcanoyle, nitro, amine, dialkylamine ou trifluorométhyle, (b) un groupe cycloalkyle en $C_3$ à $C_7$, (c) un halogène, (d) le groupe trifluorométhyle, ou (e) un groupe amine de formule

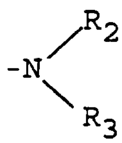

dans laquelle $R_2$ et $R_3$ peuvent être identiques ou différents et peuvent être l'hydrogène ou un groupe alkyle inférieur, arylalkyle, aryle, t-butyloxycarbonyle, benzhydryle ou trityle;
procédé qui consiste à faire réagir une oléfine de formule

$R_1$-CH = $CH_2$

dans laquelle $R_1$ est tel que défini ci-dessus, avec de l'hypophosphite de sodium en présence d'un solvant alcoolique organique, un promoteur radicalaire et de l'acide sulfurique ou de l'acide chlorhydrique, pour former directement l'acide phosphoneux, sans former l'ester d'alcool, et à récupérer ledit acide phosphoneux du mélange réactionnel.

**2.** Procédé selon la revendication 1, dans lequel on mène la réaction à un pH d'environ 0 à environ 4.

**3.** Procédé selon la revendication 2, dans lequel on mène la réaction à un pH d'environ 0 à environ 2.

**4.** Procédé selon l'une quelconque des revendications précédentes, dans lequel on utilise le promoteur radicalaire en quantités catalytiques.

**5.** Procédé selon l'une quelconque des revendications précédentes, dans lequel le promoteur radicalaire est l'azobisisobutyronitrile, le peroxyde de di-t-butyle, le peroxyde de benzoyle ou le peroxyde d'hydrogène.

**6.** Procédé selon la revendication 5, dans lequel le promoteur radicalaire est l'azobis-isobutyronitrile.

**7.** Procédé selon l'une quelconque des revendications précédentes, dans lequel on utilise le réactif phosphoré dans un rapport molaire à l'oléfine situé dans l'intervalle d'environ 0,5:1 à environ 6:1.

**8.** Procédé selon l'une quelconque des revendications précédentes, dans lequel on utilise le promoteur radicalaire dans un rapport molaire à l'oléfine situé dans l'intervalle d'environ 0,01:1 à environ 0,3:1.

**9.** Procédé selon l'une quelconque des revendications précédentes, dans lequel l'oléfine est un composé de formule alkyl-CH = $CH_2$.

**10.** Procédé selon l'une quelconque des revendications 1 à 9, dans lequel l'oléfine est un composé de formule alkylaryl-CH = $CH_2$.

**11.** Procédé selon la revendication 10, dans lequel l'oléfine est un composé de formule

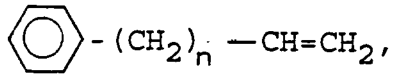

dans laquelle n est égal à 2, 3 ou 4.

**12.** Procédé selon l'une quelconque des revendications précédentes, dans lequel on mène la réaction à une température située dans l'intervalle d'environ 40 à environ 120 °C.

**13.** Procédé selon l'une quelconque des revendications précédentes, dans lequel le solvant alcoolique organique est l'éthanol ou le méthanol.

**14.** Procédé selon la revendication 13, dans lequel on mène la réaction au voisinage de la température de reflux du solvant organique.

**15.** Procédé selon l'une quelconque des revendications précédentes, dans lequel on mène la réaction pendant un laps de temps d'environ 3 à environ 20 heures.

**16.** Procédé selon l'une quelconque des revendications précédentes, dans lequel $R_1$ est un groupe alkyle ou phényl-alkyle, le groupe phényle étant facultativement substitué par halogène ou trifluorométhyle.